# EUROPÄISCHE PATENTANMELDUNG

(11) **EP 1 674 182 A1**
(43) Veröffentlichungstag der Anmeldung: **28.06.2006**
(21) Anmeldenummer: 05026681.6
(22) Anmeldetag: 07.12.2005
(51) Int. Cl.: B23B 51/04

(54) **Bohrwerkzeug und Bohrmaschine**

(30) Priorität: 22.12.2004 DE 102004062912
(71) Anmelder: C. & E. Fein GmbH, 73529 Schwäbisch-Gmünd-Bargau (DE)
(72) Erfinder: Bortz, Jörg, 72805 Lichtenstein (DE); Wiehler, Jürgen, 72829 Engstingen (DE)
(74) Vertreter: Gahlert, Stefan

(57) **Zusammenfassung**

Es werden ein Bohrwerkzeug (10) und eine zugehörige Bohrmaschine (30) angegeben, wobei zwischen Bohrwerkzeug (10) und Bohrmaschine (30) eine vorteilhafte und dauerhafte Verbindung durch ein Formschlusselement (20) am Bohrwerkzeug und ein zugeordnetes Formschlussgegenelement (44) an einer Werkzeugaufnahme (32) der Bohrmaschine (30) gewährleistet ist. Eine Verrastung zwischen Bohrwerkzeug (10) und der Werkzeugaufnahme (32) der Bohrmaschine (30) wird vorzugsweise nur dann über Rastelemente (46) der Werkzeugaufnahme (32) ermöglicht, wenn die formschlüssige Verbindung zwischen dem Formschlusselement (20) und dem Formschlussgegenelement (44) hergestellt ist (Fig. 3).

## Beschreibung

Die Erfindung betrifft ein Bohrwerkzeug, insbesondere ein Kernlochbohrwerkzeug, sowie eine Bohrmaschine mit einer geeigneten Werkzeugaufnahme zur Aufnahme eines derartigen Bohrwerkzeuges.

Aus der DE 44 22 342 C2 ist ein Kernlochbohrer sowie eine Bohrmaschine mit einer zur Aufnahme eines derartigen Kernlochbohrers geeigneten Werkzeugaufnahme bekannt. Hierbei weist das Bohrwerkzeug einen Schaft zur Befestigung an einer zugeordneten Werkzeugaufnahme einer Bohrmaschine auf, wobei der Schaft zylindrisch ausgebildet ist und eine Mehrzahl von Vertiefungen aufweist, in die Kugeln der zugeordneten Werkzeugaufnahme der Bohrmaschine eingreifen können. Wird ein Bohrwerkzeug in die Werkzeugaufnahme eingeschoben, so gelangen in der Werkzeugaufnahme beweglich gehaltene Kugeln in die Vertiefungen des Schaftes des Bohrwerkzeuges und erlauben nunmehr eine Kraftübertragung zwischen der Bohrmaschine und dem Bohrwerkzeug.

Nachteilig an dieser Ausführung ist, dass die Kraftübertragung ausschließlich über die Kugeln bewirkt wird. Dies kann zu einem vorzeitigen Verschleiß führen, insbesondere da Kernlochbohrwerkzeuge hohen Drehmomenten ausgesetzt sind.

Die Aufgabe der Erfindung liegt somit darin, eine verbesserte Kraftübertragung zwischen einem Bohrwerkzeug und einer Werkzeugaufnahme einer zugehörigen Bohrmaschine zu ermöglichen. Hierzu soll ein geeignetes Bohrwerkzeug, eine Bohrmaschine mit einer geeigneten Werkzeugaufnahme und eine Kombination derselben angegeben werden.

Diese Aufgabe wird erfindungsgemäß durch ein Bohrwerkzeug, insbesondere einen Kernlochbohrer gelöst, mit einem Schaft zur Befestigung an einer zugeordneten Werkzeugaufnahme einer Bohrmaschine, wobei der Schaft mindestens eine Vertiefung zur Aufnahme mindestens eines Rastelementes der Werkzeugaufnahme aufweist, und wobei ein Formschlusselement vorgesehen ist, das gegenüber der Vertiefung axial versetzt ist und zur formschlüssigen Verbindung mit einem Formschlussgegenelement der Werkzeugaufnahme ausgebildet ist.

Die Aufgabe der Erfindung wird ferner durch eine Bohrmaschine mit einem Antrieb zum Antrieb einer Werkzeugaufnahme gelöst, die einen topfförmigen Fortsatz mit einem Hohlraum aufweist, in den ein Bohrwerkzeug mit seinem Schaft einsetzbar ist, und mit mindestens einem radial beweglichen Rastelement, das eine Verrastung mit einer zugeordneten Vertiefung am Schaft eines in die Werkzeugnahme eingeführten Bohrwerkzeuges erlaubt, wobei an der Innenwand des Hohlraums ein Formschlussgegenelement vorgesehen ist, das gegenüber dem mindestens einem Rastelement axial versetzt ist und zur formschlüssigen Verbindung mit einem Formschlusselement des Bohrwerkzeuges ausgebildet ist.

Die Aufgabe der Erfindung wird auf diese Weise vollkommen gelöst.

Erfindungsgemäß werden nämlich nunmehr unabhängig von den verwendeten Rastelementen nunmehr ein Formschlusselement und ein Formschlussgegenelement am Bohrwerkzeug einerseits und an der Bohrmaschine andererseits verwendet, um einen Formschluss zwischen dem Bohrwerkzeug und der Bohrmaschine zu gewährleisten.

Erfindungsgemäß wird somit nunmehr eine sichere Verbindung zwischen dem Bohrwerkzeug und der Bohrmaschine durch einen Formschluss gewährleistet, ohne dass hierbei die im Stand der Technik verwendeten Kugeln zur Herstellung eines Formschlusses genutzt werden. Zusätzlich ist jedoch das mindestens eine Rastelement an der Werkzeugaufnahme und die mindestens eine zugeordnete Vertiefung am Bohrwerkzeug vorgesehen, um es zu ermöglichen, dass erfindungsgemäße Bohrwerkzeuge auch an herkömmlichen Bohrmaschinen gespannt werden können.

In vorteilhafter Weiterbildung der Erfindung ist die Vertiefung am Schaft als Umfangsnut ausgebildet.

Auf diese Weise können eine oder mehrere Rastelemente verwendet werden, um eine Verrastung zwischen der Umfangsnut des Schaftes und der Werkzeugaufnahme zu ermöglichen. Durch die Ausgestaltung der Vertiefung als Umfangsnut wird gewährleistet, dass über die Rastelemente keinerlei Drehmomente übertragen werden.

Das Formschlusselement eines Schaftes kann vorzugsweise als Mehrkant, insbesondere als Vierkant, Sechskant oder Achtkant ausgebildet sein.

In entsprechender Weise kann das Formschlussgegenelement an der Werkzeugaufnahme als Mehrkant, insbesondere als Vierkant, Sechskant oder Achtkant ausgebildet sein.

Gemäß einer weiteren Ausgestaltung der Erfindung ist das Formschlusselement an dem dem äußeren Ende abgewandten Ende des Schaftes vorgesehen, und die mindestens eine Vertiefung ist in Richtung auf das äußere Ende des Schaftes axial versetzt angeordnet.

In entsprechender Weise ist gemäß einer weiteren Ausgestaltung der Erfindung das Formschlussgegenelement an der Werkzeugaufnahme am äußeren Ende der Innenwand des Hohlraums vorgesehen, wobei das mindestens eine Rastelement gegenüber dem Formschlussgegenelement in Richtung auf das innere Ende des Hohlraums axial versetzt ist.

Durch diese Maßnahmen wird es ermöglicht, das Formschlusselement bzw. das Formschlussgegenelement gegenüber der mindestens einen Vertiefung bzw. gegenüber dem mindestens einen Rastelement derart zu versetzen, dass eine Verrastung mit dem mindestens einen Rastelement nur dann ermöglicht ist, wenn das Formschlusselement am Formschlussgegenelement der Werkzeugaufnahme formschlüssig angreift.

Auf diese Weise kann sichergestellt werden, dass beim Einschieben des Bohrwerkzeuges in die Werkzeugaufnahme immer ein ordnungsgemäßer Formschluss zwischen Bohrwerkzeug und Werkzeugaufnahme gewährleistet ist. Hierzu muss lediglich das Bohrwerkzeug in der geeigneten Winkelstellung in die Werkzeugaufnahme eingeführt und verrastet werden.

Gemäß einer weiteren Ausgestaltung der Erfindung weist der Schaft des Bohrwerkzeuges eine zylindrische Grundform auf und vorzugsweise an seiner Außenoberfläche eine Mehrzahl von Abflachungen.

Auf diese Weise kann der Schaft mit den herkömmlichen Merkmalen ausgestaltet werden, so dass auch ein Spannen von erfindungsgemäßen Bohrwerkzeugen an herkömmlichen Bohrmaschinen ermöglicht ist, bei denen eine Kraftübertragung lediglich über Kugeln erfolgt, die zwischen Vertiefungen an der Außenoberfläche der Bohrwerkzeuge und Vertiefungen an der Innenoberfläche der Werkzeugaufnahme eingreifen. Somit können die erfindungsgemäßen Bohrwerkzeuge auch zur Verbindung mit Werkzeugaufnahmen des Typs "Weldon®" verwendet werden.

Gemäß einer vorteilhaften Weiterbildung der Erfindung sind drei Rastelemente, die vorzugsweise als Kugeln ausgebildet sind, in gleichmäßigen Winkelabständen zueinander in Radialbohrungen radialbeweglich angeordnet.

Hierbei können die Rastelemente durch eine Hülse gegen Herausfallen nach außen gesichert sein, die den Fortsatz von außen umschließt.

Bei einer erfindungsgemäßen Kombination einer Bohrmaschine mit einem Bohrwerkzeug der vorstehend beschriebenen Art, ist das Formschlusselement des Bohrwerkzeuges gegenüber der mindestens einen Vertiefung des Bohrwerkzeuges derart axial versetzt angeordnet, dass eine Verrastung mit dem mindestens einen Rastelement nur dann ermöglicht ist, wenn das Formschlusselement an den Formschlussgegenelement der Werkzeugaufnahme formschlüssig angreift.

Auf diese Weise wird eine sichere formschlüssige Befestigung des Bohrwerkzeuges an der Bohrmaschine gewährleistet.

Es versteht sich, dass die vorstehend genannten und die nachstehend noch zu erläuternden Merkmale der Erfindung nicht nur der jeweils angegebenen Kombination sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Fig. 1:: eine Seitenansicht eines erfindungsgemäßen Bohrwerkzeuges;
- Fig. 2:: einen Schnitt durch das Bohrwerkzeug gemäß der Linie II-II und
- Fig. 3:: eine Zusammenstellungszeichnung im Längsschnitt, wobei ein erfindungsgemäßes Bohrwerkzeug gemäß der Figuren 1 und 2 in eine zugeordnete Werkzeugaufnahme einer Bohrmaschine eingesetzt ist.

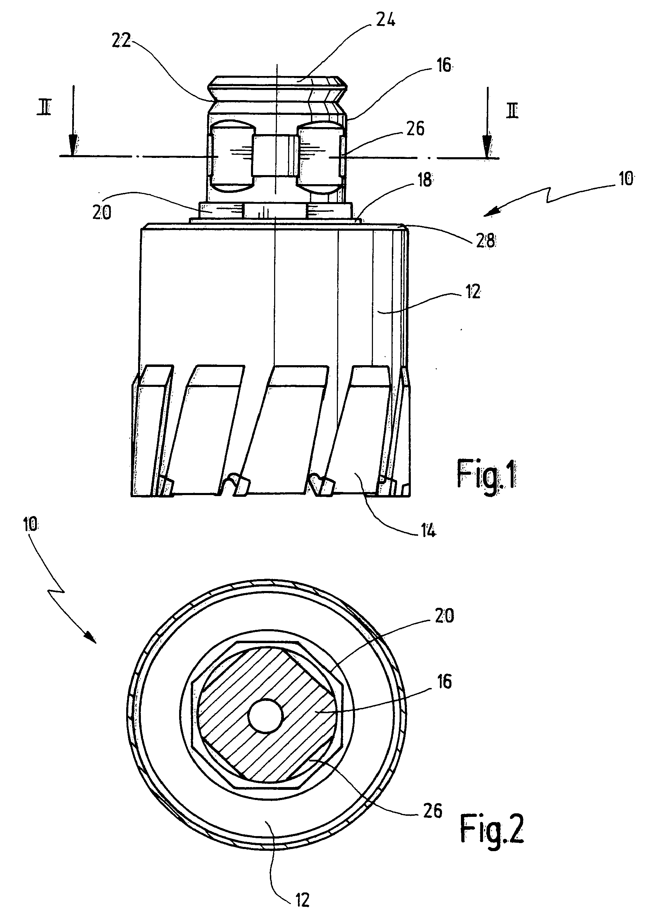

In den Figuren 1 und 2 ist ein erfindungsgemäßes Bohrwerkzeug insgesamt mit der Ziffer 10 bezeichnet.

Das Bohrwerkzeug 10 weist eine topfförmige Bohrkrone 12 auf, die an ihrem äußeren Rand eine Mehrzahl von Schneidelementen 14 aufweist, um eine Kernlochbohrung erzeugen zu können. Die Bohrkrone 12 ist durch eine radiale Stirnfläche 28 zu der den Schneidelementen 14 gegenüberliegenden Seite hin abgeschlossen. Von einer sich daran anschließenden Bundfläche 18 mit kleinerem Durchmesser aus erstreckt sich ein grundsätzlich zylindrischer Schaft 16 in Richtung zu einem äußeren Ende 24. Angrenzend an die Bundfläche 18 ist ein Ansatz in Form eines Formschlusselementes 20, das als Achtkant ausgebildet ist, vorgesehen. An dieses Formschlusselement 20 schließt sich dann der Schaft 16 mit seiner grundsätzlich zylindrischen Außenoberfläche an. Unmittelbar angrenzend an das äußere Ende 24 des Schaftes 16 ist eine Vertiefung 22 vorgesehen, die als Umfangsnut oder Ringnut ausgebildet ist. Diese Vertiefung 22 dient zur Aufnahme von Rastelementen einer zugeordneten Werkzeugaufnahme einer Bohrmaschine. An seiner Umfangsfläche ist der Schaft 16 mit insgesamt vier Abflachungen 26 versehen, die eine Verbindung des Bohrwerkzeuges 10 mit einer im Stand der Technik üblichen Aufnahme des Typs Weldon® ermöglichen.

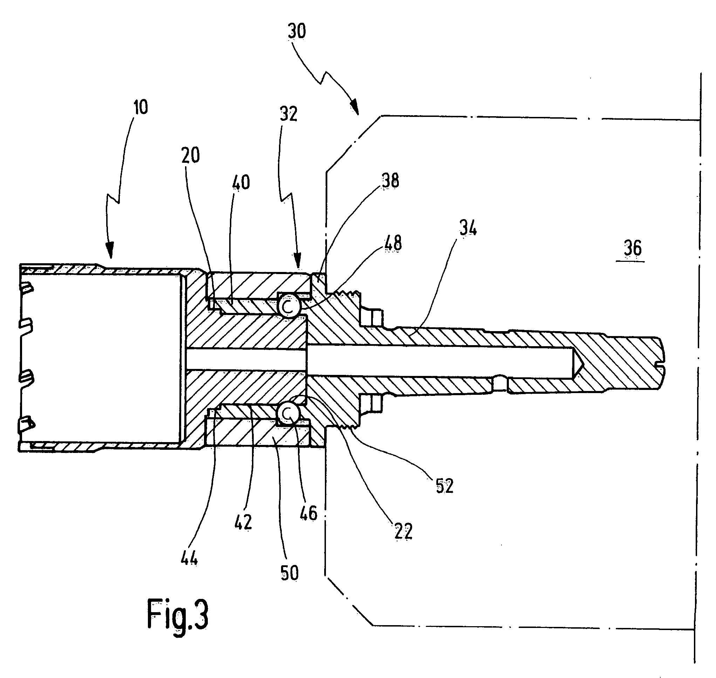

Das Zusammenwirken zwischen einem Bohrwerkzeug 10 und der Werkzeugaufnahme 32 einer zugeordneten Werkzeugmaschine 30 wird im Folgenden anhand von Fig. 3 näher erläutert.

In Fig. 3 ist eine insgesamt mit der Ziffer 30 bezeichnete Bohrmaschine lediglich in ihrem äußeren Bereich dargestellt. Die Bohrmaschine 30 weist einen mit der Ziffer 36 angedeuteten Antrieb auf, mittels dessen ein Wellenabschnitt 34 rotierend angetrieben werden kann. Der Wellenabschnitt 34 kann, wie in Fig. 3 dargestellt, eine konische Bauform aufweisen und mit Hilfe eines Gewindes 52 mit einem von Antrieb 36 rotatorisch angetriebenen Element verschraubt werden. Die Werkzeugaufnahme 32 weist einen sich vom Gewinde 52 aus nach außen hervorstehenden Ringbund 38 auf, von dem aus sich ein topfförmiger Fortsatz 40 nach außen hin erstreckt. In dem topfförmigen Fortsatz 40 ist ein zylindrischer Hohlraum 42 vorgesehen. Am äußeren Ende des Hohlraums 42 ist an der Innenwand ein Formschlussgegenelement 44 in Form eines Achtkants ausgebildet, dessen Form und Größe auf das Formschlusselement 20 am Bohrwerkzeug 10 abgestimmt ist. Im Bereich des Bodens des Hohlraums 42 sind Rastelemente 46 in Form von federbelasteten Kugeln in Radialbohrungen 48, die die Wandung des Fortsatzes 40 durchsetzen, vorgesehen. Es sind insgesamt drei Rastelemente in gleichmäßigen Winkelabständen von 120° zueinander angeordnet. Die Radialbohrungen 48 enden zur Innenseite des Hohlraums 42 hin mit einem derartigen Durchmesser, dass die eingesetzten Kugeln nicht in den Hohlraum 42 hineinfallen können. Nach außen hin sind die Kugeln durch eine auf die Außenwand des Fortsatzes 40 aufgeschobene Hülse 50 gegen ein Herausfallen gesichert. Die Hülse 50 ist mit dem Fortsatz 40 verschraubt oder in sonstiger Weise verbunden, beispielsweise durch eine Presspassung.

Die Kugeln sind durch Federelemente (nicht dargestellt) nach innen hin in Richtung auf den Hohlraum 42 vorgespannt. Die gefederten Kugeln können durch beliebige andere gefederte Elemente ersetzt werden, wie z.B. durch gefederte Stifte.

Der axiale Abstand zwischen den Rastelementen 46 und der zugeordneten Vertiefung 22 in Form der Umfangsnut am Schaft 16 des Bohrwerkzeuges 10 ist nun derart gewählt, dass ein Einrasten der Rastelemente 46 bzw. der Kugeln in die Vertiefung 22 nur dann ermöglicht ist, wenn das Formschlusselement 20 des Bohrwerkzeuges 10 formschlüssig in das Formschlussgegenelement 44 am äußeren Ende des Hohlraums 42 eingreift.

## Patentansprüche

1. Bohrwerkzeug, insbesondere Kernlochbohrer, mit einem Schaft (16) zur Befestigung an einer zugeordneten Werkzeugaufnahme (32) einer Bohrmaschine (30), wobei der Schaft (16) mindestens eine Vertiefung (22) zur Aufnahme mindestens eines Rastelementes (46) der Werkzeugaufnahme (32) aufweist, **dadurch gekennzeichnet, dass** ein Formschlusselement (20) vorgesehen ist, das gegenüber der Vertiefung (22) axial versetzt ist und zur formschlüssigen Verbindung mit einem Formschlussgegenelement (44) der Werkzeugaufnahme (32) ausgebildet ist.

2. Bohrwerkzeug nach Anspruch 1, **dadurch gekennzeichnet, dass** die Vertiefung (22) als Umfangsnut ausgebildet ist.

3. Bohrwerkzeug nach Anspruch 1 oder 2, **dadurch gekennzeichnet, dass** das Formschlusselement (20) als Mehrkant, insbesondere als Vierkant, Sechskant oder Achtkant ausgebildet ist.

4. Bohrwerkzeug nach einem der vorhergehenden Ansprüche, **dadurch gekennzeichnet, dass** das Formschlusselement (20) an dem dem äußeren Ende (24) abgewandten Ende des Schaftes (16) vorgesehen ist, und dass die mindestens eine Vertiefung (22) in Richtung auf das äußere Ende (24) des Schaftes (16) axial versetzt angeordnet ist.

5. Bohrwerkzeug nach einem der vorhergehenden Ansprüche, **dadurch gekennzeichnet, dass** der Schaft (16) eine zylindrische Grundform aufweist und vorzugsweise an seiner Außenoberfläche eine Mehrzahl von Abflachungen (26) aufweist.

6. Bohrmaschine mit einem Antrieb zum Antrieb einer Werkzeugaufnahme (32), die einen topfförmigen Fortsatz (40) mit einem Hohlraum (42) aufweist, in den ein Bohrwerkzeug (10) mit seinem Schaft (16) einsetzbar ist, und mit mindestens einem radial beweglichen Rastelement (46) das eine Verrastung mit einer zugeordneten Vertiefung (22) am Schaft (16) eines in die Werkzeugaufnahme (32) eingeführten Bohrwerkzeuges (10) erlaubt, **dadurch gekennzeichnet, dass** an der Innenwandung des Hohlraums (42) ein Formschlussgegenelement (44) vorgesehen ist, das gegenüber dem mindestens einen Rastelement (46) axial versetzt ist und zur formschlüssigen Verbindung mit einem Formschlusselement (20) des Bohrwerkzeuges (10) ausgebildet ist.

7. Bohrmaschine nach Anspruch 6, **dadurch gekennzeichnet, dass** das Formschlussgegenelement (44) als Mehrkant, insbesondere als Vierkant, Sechskant oder Achtkant ausgebildet ist.

8. Bohrmaschine nach Anspruch 6 oder 7, **dadurch gekennzeichnet, dass** das Formschlussgegenelement (44) am äußeren Ende des Hohlraums (42) vorgesehen ist, und dass das mindestens eine Rastelement (46) gegenüber dem Formschlussgegenelement in Richtung auf den Boden des Hohlraums (42) axial versetzt ist.

9. Bohrmaschine nach einem der Ansprüche 6 bis 8, **dadurch gekennzeichnet, dass** drei Rastelemente (46), die vorzugsweise als Kugeln ausgebildet sind, in gleichmäßigen Winkelabständen zueinander in Radialbohrungen (48) radial beweglich angeordnet sind.

10. Bohrmaschine nach Anspruch 9, **dadurch gekennzeichnet, dass** die Rastelemente (46) durch eine Hülse (50) gegen Herausfallen nach außen gesichert sind, die den Fortsatz (40) von außen umschließt.

11. Bohrmaschine nach einem der Ansprüche 6 bis 10, mit einem Bohrwerkzeug (10) nach einem der Ansprüche 1 bis 5.

12. Bohrmaschine nach Anspruch 11, **dadurch gekennzeichnet, dass** das Formschlusselement (20) des Bohrwerkzeuges (10) gegenüber der mindestens einen Vertiefung (22) des Bohrwerkzeuges (10) derart axial versetzt angeordnet ist, dass eine Verrastung mit dem mindestens einen Rastelement (46) nur dann ermöglicht ist, wenn das Formschlusselement (20) an dem Formschlussgegenelement (44) der Werkzeugaufnahme (32) formschlüssig angreift.
